(19) Europäisches Patentamt
European Patent Office
Office européen des brevets

(11) Publication number: **0 361 929 A2**

# (12) EUROPEAN PATENT APPLICATION

(21) Application number: 89309903.6

(51) Int. Cl.5: G02B 1/04 , C08F 212/14 , C08F 230/08

(22) Date of filing: 28.09.89

(30) Priority: 28.09.88 US 251199
21.07.89 US 383802

(43) Date of publication of application:
04.04.90 Bulletin 90/14

(84) Designated Contracting States:
AT BE CH DE ES FR GB IT LI NL SE

(71) Applicant: IOPTEX RESEARCH INC.
1301 Optical Drive
Azusa California 91702(US)

(72) Inventor: Gupta, Amitava
1551 Rose Villa Street
Passadena CA 91106(US)

(74) Representative: Cole, William Gwyn, Dr.
Smith and Nephew Research Limited Gilston Park
Harlow Essex CM20 2RQ(GB)

## (54) Contact lenses.

(57) A contact lens material which is lipophobic, easily machined an is oxygen permeable which comprises a copolymer comprising from 25% to 50% by weight of a polysiloxyanylalkyl ester of, for example, acrylic or methacrylic acid, at least 40% e.g. from 40% to 69% by weight of a fluorinated styrene, from 4% to 7% of a hydrophilic monomer e.g. methacrylic acid, oph from 2% to 5% of a suitable cross-linking agent and from 0% to 2% of a UV absorber.

EP 0 361 929 A2

## CONTACT LENSES

The present invention relates to contact lens materials which are lipophobic, easily machined and oxygen permeable and to contact lenses fabricated from such materials.

It is known in the art, according to United States Patent Nos. 3,808,178 and 4,120,570 that polymeric materials may be used to fabricate contact lenses and have improved oxygen permeability, sufficient wettability to maintain a tear film, improved mechanical strength, and which are sufficiently rigid to permit precision machining and polishing. Such materials comprise a combination of a poly siloxanylalkyl ester of acrylic or methacrylic acid. Particular compositions comprising combinations of monomers and comonomers are disclosed.

While the contact lenses described in the above patents provide improved oxygen permeability, wettability, mechanical stength and machinability in practice, it has been found that fats and lipoproteins in ocular fluids adhere to and limit the usefulness of such compositions as contact lens materials.

It is also known in the art that the adherence of lipids and other lipophilic (oleophilic) materials on a contact lens can be inhibited by making the contact lens material lipophobic. Generally speaking, the addition of fluorocarbons, such as polyacrylate or polymethacrylate esters derivatized with perfluorinated side groups will render a contact lens material lipohobic. However, the addition of fluorinated aliphatic esters or fluorinated polyethers to the polysiloxane contact lens materials described in United States Patent Nos. 3,808,178 and 4,120,570 render the resulting contact lens material nonwettable and soft, hence unsuitable for the required machining processes associated with contact lenses, and subject to distortion in the eye. In order to render such a resulting lens material sufficiently wettable for contact lens applications requires a significant (greater than 6%) addition of a hydrophilic component, such as 2-hydroxyethyl methacrylate, methacrylic acid, or 4-vinyl pyrrolidone. Unfortunately, such quantities of a hydrophilic component render the lens material hydrophilic, absorbing undesired quantities of water, proteins and metal ions. Also, the absorption of water undesirably increase the dimensions of the lens material. Accordingly, a need exists for a contact lens material having an optimum combination of high oxygen permeability, mechanincal strength, machinability, wettability and improved lipophobicity. The present invention satisfies such a need.

The present invention accordingly provides a contact lens material comprising a copolymer containing from 25% to 50% by weight of polysiloxanyl alkyl ester, at least 40% by weight of a fluorinated styrene and from 2% to 7% by weight of a hydrophilic monomer.

In one embodiment of this invention the material is a solid copolymer of comonomers consisting essentially of 25% to 50% by weight of a polysiloxanyl alkyl ester, from 40% to 65% by weight of a fluorinated styrene and about 3% to 5% by weight of a methacrylic acid.

In another embodiment of the invention the material is a lipophobic, easily machined and is oxygen permeable which comprises a copolymer comprising from 25% to 50% by weight of a polysiloxanylalkyl ester of acrylic or methacrylic acid, from 40% to 69% by weight of a fluorinated styrene, from 4% to 7% of a hydrophilic monomer, from 2% to 5% of a suitable cross-linking agent and from 0% to 2% of a UV absorber.

The present invention further provides contact lenses fabricated from the lens materials in accordance with the invention.

The fluorinated styrene may be present in amounts of from 63% to 69%, or from 44% to 50% when the UV absorber is absent.

Alternatively, the fluorinated styrene may be present in amounts ranging from 63% to 67% or from 44% to 60% when 2% by weight of a UV absorber is also present.

The poly siloxanylalkyl ester may be an acrylate or methacrylate ester.

The fluorinated styrene may be a mono , di-, tri-or pentafluorinated styrene.

In one embodiment of the present invention the contact lens material comprises from 63% to 69% mono-or di- fluorinated styrene when the UV absorber is not included. When the UV absorber is included in an amount of 2% by weight the amount of fluorinated styrene present is 63% to 67% mono- or di-fluorinated styrene.

The fluorinated styrene may be a trifluorinated styrene in an amount of from 42% to 69%.

According to a further embodiment of the present invention the contact lens material comprises at least 42%, preferably at 45% pentaflurostyrene. The contact lens material may comprise 42% to 69% preferably 44% to 67% pentafluorostyrene. Typically the material will comprise about 60% pentafluorostyrene.

The hydrophilic monomer may be methacrylic acid, vinyl pyrrolidone or hydroxyethylmethacrylate.

The cross-linking agent may "$SiX_3$", ethylene glycol dimethacrylate or glycerol dimethacrylate. $SiX_3$ is a cross-linking agent of the formula:

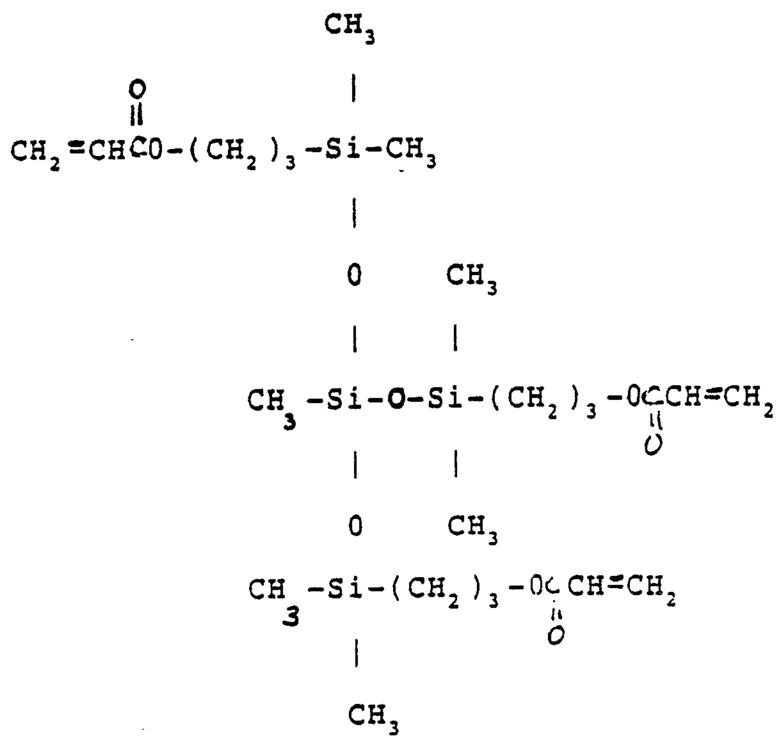

In a preferred embodiment of the present invention the contact lens material comprises 3-methacryloxypropyl tris-(tri-methylsiloxyl) silane, pentafluoro styrene and methacrylic acid. Typically, the silane may be present in an amount of about 35% by weight.

According to a further embodiment of the present invention the contact lens material comprises at least 45% by weight silane, and at least 5% methacrylic acid.

Any suitable ultraviolet absorber can be used in the contact lens materials of the present invention. Acryloxybenzophenone is a suitable UV absorber for use in the contact lens materials of the present invention.

The lens materials in accordance with the invention may be produced by conventional polymerisation techniques. The lens materials are hard materials and may be machined by conventional techniques to form contact lenses which are lipophobic and have good oxygen permealities. The optical characteristics of such lens are good, there being no phase separation in the lens material.

The invention will be illustrated by the following Examples and the accompanying drawing which is a Zissman Plot for the contact lens material of the present invention.

Example 1

A contact lens material according to the present invention was produced comprising 45% pentafluoro styrene, 45% 3-methacryloxypropyl tris-(tri-methylsiloxyl) silane, 5% methacylic acid, 3% ethylene glycol dimethacrylate and 2% 2-hydroxy-4-ethoxyacryloxy benzophenone.

The pentafluoro styrene and methacrylic acid were purified by vacuum distillation at 35 °C. The first and last 10% of the fraction were discarded and the middle fraction retained for polymerization. A monomer mixture was then prepared by adding the silane and pentafluoro styrene, methacrylic acid, a small amount of a free radical polymerization catalyst such as 2,2 azobisisobutyronitrile or 2,5-dimethyl 2,5 BIS(2-ethylhexoyl-peroxy) hexane, available as USP245 from Union Carbide Corporation (for example 0.5%), a cross-linking agent such as ethylene glycol dimethacrylate and a UV absorber such as 2-hydroxy-4-ethoxyacryloxy benzphenone. The monomer mixture was thoroughly deaereatd by vacuum degassing for 5 minutes with stirring, then maintained under a flow of dry high purity nitrogen gas. Polymerization was then carried out in a sealed glass tube for rod polymerization or between plates of tempered glass separated by a plastic (PVC) gasket for sheet polymerization. The polymerization was carried out in a convection oven at 65 °C for 20 hours followed by 1 hour at 100 °C.

Example 2

A contact lens material according to the present invention was produced comprising 44% pentafluoro styrene, 50% 3-methacryloxypropyl tris-(tri-methylsiloxyl) silane, 4% methacrylic acid, 2% ethylene glycol dimethacrylate and 2% 2-hydroxy-4-ethoxyacryoxy benzophenone. The material was produced according to the method described in Example 1.

Example 3

A contact lens material according to the present invention was produced comprising 61% pentafluoro styrene, 35% 3-methacryloxypropyl tris-(tri-methylsiloxyl) silane, 4% methacrylic acid, 2% ethylene glycol dimethacrylate and 2% 2-hydroxy-4-ethoxyacryloxy bendzophenone. The material was produced according to the method described in Example 1.

Example 4

The materials of Examples 2 and 3 were taken and the rods were cut and the sheets were cored to form 0.5 inch discs. The discs were then faced on a lathe to obtain thicknesses ranging from 0.1mm to 0.4mm tested for oxygen permeability. Table 1 below sets forth the oxygen permeability measurements on the contact lens materials of Examples 2 and 3:

TABLE 1

| Example No. | DK ($cm_2$/sec) ml $0_2$/ml Xmm Hg) |
|---|---|
| 2 | 54 X $10^{-11}$ |
| 3 | 153 X $10^{-11}$ |

Contact angles were determined for the lenses of Examples 2 and 3 using water. Contact angles were measured by taking measurements immediately upon placing water drops on the surface and also after waiting for five minutes. Table 2 below provides the contact angles of the lenses of Examples 2 and 3:

TABLE 2

| Example No. | Contact Angles With Water | |
|---|---|---|
| | Fresh Drop | 5 Minute Old Drop |
| 3 | 88 | 86 |
| 4 | 95 | 94 |

The contact lenses of the present invention not only exhibit improved oxygen permeability, but also have increased strength and machinability, as well as, improved lipophobicity as compared to prior art contact lenses. The contact lenses of the present invention repel fats that would otherwise adhere to the surface of the contact lens. Table 3 below sets forth the lipophobicity characteristics of the lens of Example 2.

TABLE 3

| Solvent | Contact Angle | Surface Tension |
|---|---|---|
| n-Octane | 3 | 21.80 |
| Cyclohexane | 17 | 25.50 |
| Tolune | 28 | 28.50 |
| Bromonaphthalene | 63 | 44.60 |
| $H_2O$ | 88 | 73.05 |
| Ethylene Glycol | 65 | 47.70 |
| Glycerol/$H_2O$ | 82 | 70.00 |

The contact angle data in Table 3 above was used to produce the Zissman Plot shown in the drawing. A straight line fitted through the data points gives the coherent surface energy of the lens of Example 3 as 2.16 dynes/cm.

## Claims

1. A contact lens material comprising a copolymer containing 25% to 50% by weight of a polysiloxanyl alkyl ester, at least 40% by weight of a fluorinated styrene and for 2% to 7% by weight of a hydrophilic monomer.

2. A contact lens material having increased lipophobicity and improved oxygen permeability, strength and machinability, the material being a solid copolymer of comonomers consisting essentially of about 25 - 50% by weight of a polysiloxanylalkyl ester, about 40 to 65% by weight of a fluorinated styrene and about 3 - 5% by weight of a methacrylic acid:

3. Material according to claim 2 wherein the fluorinated styrene is pentafluorostyrene.

4. Material according to claim 3 wherein the pentafluorostyrene is present in an amount of about 60% by weight.

5. Material according to any one of claims 1 to 4 wherein the ester is 3-Methacryloxypropyl-tris-(trimethethylsiloxyl) silane present in an amount of about 35% by weight.

6. A contact lens material which is lipophobic, easily machined and is oxygen permeable which comprises a copolymer comprising from 25% to 50% by weight of a polysiloxanylalkyl ester of acrylic or methacrylic acid, from 40% to 69% by weight of a fluorinated styrene, from 4% to 7% of a hydrophilic monomer, from 2% to 5% of a suitable cross-linking agent and from 0% to 2% of a UV absorber.

7. Material according to claim 6 which comprises from 63% to 69% fluorinated styrene and wherein the UV absorber is absent.

8. Material according to claim 6 which comprises from 63% to 67% fluorinated styrene and 2% by weight of a UV absorber.

9. Material according to any one of claims 6 to 8 which comprises from 44% to 50% fluorinated styrene.

10. Material according to any one of claims 6 to 9 wherein the poly siloxanylalkyl ester is an acrylate ester or a methacrylate ester.

11. Material according to any one of claims 6 to 10 wherein the fluorinated styrene comprises monofluorinated styrene, a difluorinated styrene or a mixture thereof.

12. Material according to any one of claims 6 to 11 wherein the fluorinated styrene comprises trifluorinated styrene.

13. Material according to any one of claims 6 to 12 wherein the fluorinated styrene comprises pentafluorinated styrene.

14. Material according to claim 13 or 14 which comprises 42% to 69% trifluorinated styrene.

15. Material according to claim 13 which comprises at least 45% pentafluorinated styrene.

16. Material according to claim 13 which comprises 42% to 69% pentafluorinated styrene.

17. Material according to any one of claims 6 to 16 wherein the hydrophilic monomer is methacrylic acid, vinyl pyrrolidone or hydroxyethylmethacrylate.

18. Material according to any one of claims 6 to 17 wherein the cross-linking agent is $SiX_3$, ethylene glycol dimethacrylate or glycerol dimethacrylate.

19. Material according to any one of claims 6 to 18 which comprises 3-methacyloxypropyl tris-(trimethylsiloxyl) silane, pentafluoro styrene and methacrylic acid.

20. Material according to any one of claims 6 to 19 which comprises at least 45% by weight silane, and at least 5% methacrylic acid.

21. A contact lens fabricated'from the material claimed in any one of the preceding claims.

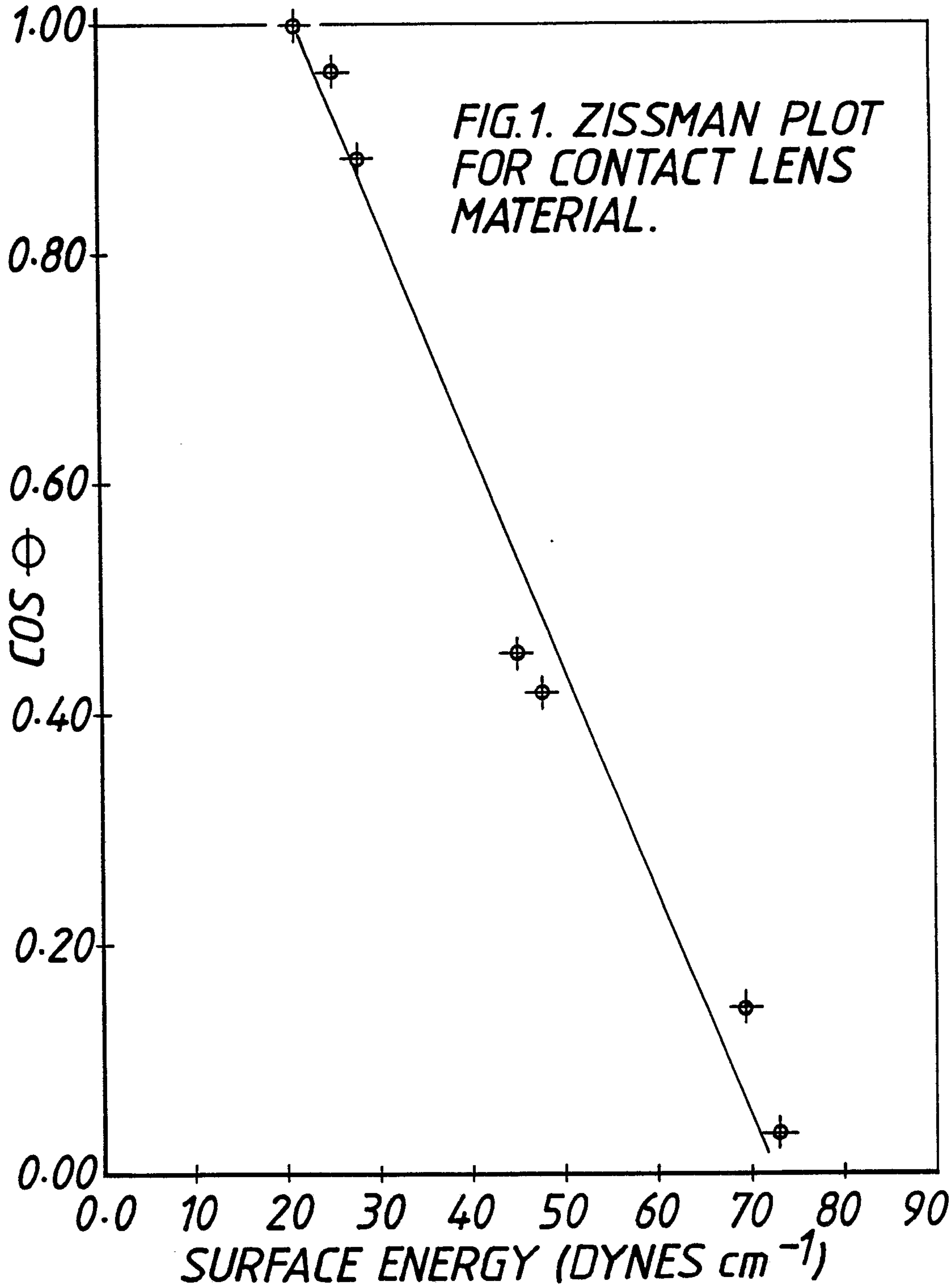


FIG.1. ZISSMAN PLOT FOR CONTACT LENS MATERIAL.